# EUROPÄISCHE PATENTSCHRIFT

(11) **EP 3 918 881 B1**
(45) Veröffentlichungstag und Bekanntmachung des Hinweises auf die Patenterteilung: **15.10.2025**
(21) Anmeldenummer: 20701760.9
(22) Anmeldetag: 23.01.2020
(51) Int. Cl.: H05B 6/70, H05B 6/72, H05B 6/64

(54) **MIKROWELLENGERÄT UND VERFAHREN ZUM BETREIBEN EINES MIKROWELLENGERÄTS**
MICROWAVE APPLIANCE AND METHOD FOR OPERATING A MICROWAVE APPLIANCE
APPAREIL À MICRO-ONDES ET PROCÉDÉ SERVANT À FAIRE FONCTIONNER UN APPAREIL À MICRO-ONDES

(30) Priorität: 01.02.2019 DE 102019201330
(43) Veröffentlichungstag der Anmeldung: 08.12.2021
(73) Patentinhaber: BSH Hausgeräte GmbH, 81739 München (DE)
(72) Erfinder: KUCHLER, Markus, 83257 Gstadt am Chiemsee (DE); RIGORTH, Kerstin, 84453 Mühldorf (DE); STERZ, Sebastian, 86845 Großaitingen (DE)
(86) Internationale Anmeldenummer: PCT/EP2020/051672
(87) Internationale Veröffentlichungsnummer: WO 2020/156929

(56) Entgegenhaltungen:
- WO-A1-2008/108046
- DE-A1- 102016 122 557
- US-A1- 2014 203 012

## Beschreibung

Die Erfindung betrifft ein Mikrowellengerät, aufweisend eine Mikrowelleneinrichtung, die zum Erzeugen von Mikrowellen und zum Einleiten der Mikrowellen in einen Garraum eingerichtet ist und die mit mindestens zwei Konfigurationen betreibbar ist, welche unterschiedliche Feldverteilungen der Mikrowellen in dem Garraum erzeugen, eine Temperaturerfassungseinrichtung, die zum kontaktlosen Erfassen einer Wärmeverteilung in dem Garraum eingerichtet ist und eine Steuereinrichtung, die zum Einstellen einer aktuellen Konfiguration der Mikrowelleneinrichtung und zum Betreiben der Mikrowelleneinrichtung eingerichtet ist. Die Erfindung betrifft auch ein Verfahren zum Betreiben eines Mikrowellengeräts, bei dem ein Garraum des Mikrowellengeräts aufgeheizt wird und eine Wärmeverteilung in dem Garraum kontaktlos erfasst wird. Die Erfindung ist insbesondere vorteilhaft anwendbar auf Haushaltsgeräte.

WO 2008/108046 A1 (MATSUSHITA ELECTRIC IND CO LTD [JP]; SANO MASAAKI ET AL.) 12. September 2008 (2008-09-12) beschreibt ein Mikrowellengerät, aufweisend eine Mikrowelleneinrichtung, die zum Erzeugen von Mikrowellen und zum Einleiten der Mikrowellen in einen Garraum eingerichtet ist und die mit mindestens zwei Konfigurationen betreibbar ist, welche unterschiedliche Feldverteilungen der Mikrowellen in dem Garraum erzeugen.

EP 0 781 072 A1 offenbart einen Mikrowellenofen mit einer Anzahl von IR-Sensorelementen zum Erhalten von Temperaturinformationen aus diskreten Erfassungsbereichen innerhalb der Kochzone des Ofens und zum Erzeugen eines zweidimensionalen Temperaturbildes der Kochzone. Auf der Grundlage dieses Temperaturbildes können notwendige Lastparameter berechnet werden, um automatische Heizvorgänge im Ofen zu steuern.

EP 2 930 433 A1 offenbart einen Ofen mit einem beheizten Hohlraum zum Kochen eines Lebensmittels, der ein dreidimensionales Abtastsystem umfasst, das zum Erfassen von Informationen über das Volumen und / oder die Form eines in dem erhitzten Hohlraum positionierten Lebensmittels konfiguriert ist.

US 2018/098381 A1 offenbart ein computerimplementiertes Verfahren zum Erwärmen eines Gegenstands in einer Kammer eines elektronischen Ofens in Richtung auf einen Zielzustand hin. Das Verfahren umfasst das Erwärmen des Gegenstands mit einem Satz von Energieerzeugern an die Kammer, während sich der elektronische Ofen in einem jeweiligen Satz von Konfigurationen befindet. Der Satz von Energieerzeugern und der jeweilige Satz von Konfigurationen definieren einen jeweiligen Satz von variablen Energieverteilungen in der Kammer. Das Verfahren umfasst auch ein Erfassen von Sensordaten, die einen jeweiligen Satz von Antworten des Gegenstands auf den Satz von Energieanwendungen definieren. Das Verfahren umfasst auch das Erzeugen eines Plans zum Erwärmen des Gegenstands in der Kammer. Der Plan wird von einem Steuersystem des elektronischen Ofens erzeugt und verwendet die Sensordaten.

DE 10 2016 122 557 A1 offenbart ein Verfahren zum Betreiben eines Gargeräts sowie ein Gargerät. Auf einem Gargutträger wird Gargut mit einer Behandlungseinrichtung in einem Garraum behandelt. Die Behandlungseinrichtung wird in Abhängigkeit eines Behandlungsprogramms durch eine Steuereinrichtung gesteuert. Dabei wird zur Berücksichtigung eines Einflusses des Gargutträgers auf die Behandlung des Garguts eine charakteristische Kenngröße für den Gargutträger ermittelt und der Steuereinrichtung zur Verfügung gestellt. Dazu wird hochfrequente Messstrahlung mit einer Mehrzahl von Frequenzen in den Garraum ausgesendet und wieder empfangen und ausgewertet. Anhand eines Vergleichs der empfangenen mit der ausgesendeten Messstrahlung wird frequenzabhängig ein Streuparameter für die im Garraum reflektierte, transmittierte oder absorbierte Messstrahlung bestimmt. Anhand des Streuparameters wird die charakteristische Kenngröße für den Gargutträger ermittelt.

EP 2 019 265 A1 offenbart ein Mikrowellengerät mit einem Temperaturdetektor zum berührungslosen Erfassen einer Temperatur eines Lebensmittels in der Heizkammer, einen Hochfrequenzgenerator zum Erzeugen einer Mikrowelle zum Erwärmen des Lebensmittels innerhalb der Heizkammer und eine Steuerung zum Steuern des Hochfrequenzgenerators basierend auf einem Messwert des Temperaturdetektors. Die Steuerung ist derart konfiguriert, dass dann, wenn ein Benutzer eine beliebige Behandlungszeit einstellt und einen Garvorgang startet, ein Ausgangspegel des Hochfrequenzgenerators so gesteuert wird, dass die von dem Temperaturdetektor gemessene Temperatur einen vorbestimmten Wert nicht überschreitet. So können Harzteile und Keramikteile in der Heizkammer vor dem Schmelzen geschützt werden.

Es ist die **Aufgabe** der vorliegenden Erfindung, die Nachteile des Standes der Technik zumindest teilweise zu überwinden und insbesondere eine verbesserte Möglichkeit zum Erwärmen von Lebensmitteln mittels Mikrowellenstrahlung bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird durch ein Mikrowellengerät gemäss Anspruch 1 gelöst.

Dieses Mikrowellengerät ergibt den Vorteil, dass es den Nicht-Gargut-Bereich mit konstruktiv einfachen Mitteln, insbesondere auch ohne Einsatz einer im sichtbaren Spektralbereich empfindlichen Kamera, zuverlässig bestimmen kann und folgend eine Einbringung von Mikrowellenleistung in den Nicht-Gargut-Bereich geringhalten kann. Dadurch wiederum kann eine Beschädigung von in dem Nicht-Gargut-Bereich befindlichen Zubehörteilen vermieden werden. Denn ohne Überwachung der Einbringung von Mikrowellen in den Nicht-Gargutflächen kann unbemerkt eine ungünstige Mikrowellen-Feldverteilung in dem Garraum entstehen, die zu einer starken (punktuellen) Erhitzung der nicht von Gargut belegten Raumbereichen und daraus resultierend zu einer Schädigung des Gargeräts führen kann. Durch die Temperaturüberwachung des Nicht-Gargut-Bereichs werden dagegen das Überhitzen dieser Komponenten oder Teile verhindert und somit Folgeschäden an Komponenten oder sogar Nutzern vermieden, z.B. ein Anschmelzen von Plastikteilen, Oberflächenschädigungen durch Funkenüberschlag, Verbrennungen durch Berühren heißer Teile, usw. Die Funkenüberschläge können beispielsweise zwischen Zubehörteilen sowie zwischen der Garraumwandung und Zubehörteilen auftreten und z.B. deren Emaillebeschichtung mit der Folge von Anschmelzungen und Verschweißungen schädigen. Unter Komponenten des Nicht-Gargut-Bereichs können im Folgenden eine Wandung des Garraums sowie Anbauteile im Garraum wie Heißluftleitbleche, Heizkörper und Einhängestrukturen für Zubehör und/oder Zubehör(teile) wie Backbleche, Gitterroste, Einhängegestelle, Gargutbehälter usw. verstanden werden.

Ebenfalls ermöglicht das Mikrowellengerät vorteilhafterweise einen schnelleren und besonders energiesparenden Mikrowellenbetrieb: Konfigurationen, die zu einer unerwünschten Erwärmung der Komponenten des Nicht-Gargut-Bereichs gehören, werden für den Heizvorgang ausgenommen, so dass das Gargut gezielt und mit verbesserter Effizienz erwärmt wird und der Heizprozess schneller abgeschlossen werden kann.

Die Konfiguration wird also vorteilhafterweise so gewählt, dass eine möglichst geringe Beaufschlagung mit Mikrowellen in dem Nicht-Gargut-Bereich, insbesondere in oder an Komponenten des Nicht-Gargut-Bereichs, stattfindet.

Dass die Steuereinrichtung dazu eingerichtet ist, mindestens eine Konfiguration der Mikrowelleneinrichtung im Hinblick auf Verringerung einer Leistung der Mikrowellen in dem erkannten Nicht-Gargut-Bereich auszuwählen oder einzustellen, kann insbesondere umfassen, dass die Steuereinrichtung dazu eingerichtet ist, eine Konfiguration an der Mikrowelleneinrichtung einzustellen oder auszuwählen, welche eine Leistung der Mikrowellen in dem erkannten Nicht-Gargut-Bereich verringert oder verringern soll.

Die Steuereinrichtung kann insbesondere dazu eingerichtet sein, mindestens eine Konfiguration der Mikrowelleneinrichtung in Abhängigkeit von dem erkannten Nicht-Gargut-Bereich so einzustellen, dass Bereiche besonders hoher Feldstärke der Mikrowellen (sog. "Hot Spots") in dem Nicht-Gargut-Bereich unterdrückt oder vermieden werden oder werden soll. Dies ist besonders vorteilhaft, da solche Hot Spots in dem Nicht-Gargut-Bereich besonders viel Energie verschwenden und zu besonders schweren Schädigungen führen können.

Das Mikrowellengerät kann ein eigenständiges Mikrowellengerät sein oder zusätzlich mindestens einen Wärmestrahlungs-Heizkörper (z.B. einen Unterhitze-Heizkörper, einen Oberhitze-Heizkörper, einen Grillheizkörper und/oder einen Heißluft-Heizkörper für umgewälzte Heißluft) aufweisen. Das Mikrowellengerät kann z.B. ein Backofen mit Mikrowellenfunktionalität sein oder kann ein Mikrowellen-Tischgerät mit zusätzlichen Backofenfunktionen sein. Das Mikrowellengerät ist insbesondere ein Haushaltsgerät, speziell Küchengerät.

Die Mikrowelleneinrichtung kann mindestens einen Mikrowellengenerator (z.B. ein Magnetron oder einen halbleiterbasierten Mikrowellengenerator) zum Erzeugen von Mikrowellen aufweisen. Die Mikrowelleneinrichtung kann auch eine Mikrowellen-Einspeisungseinrichtung zum Einspeisen der erzeugten Mikrowellen aufweisen. Die Mikrowellen-Einspeisungseinrichtung kann z.B. mindestens eine Mikrowellenführung, mindestens eine Antenne (insbesondere eine bezüglich ihrer Position oder Ausrichtung einstellbare Antenne, z.B. eine Drehantenne), mindestens einen Wobbler usw. aufweisen.

Dass die Mikrowelleneinrichtung mit mindestens zwei Konfigurationen betreibbar ist, welche unterschiedliche Feldverteilungen der Mikrowellen in dem Garraum erzeugen, umfasst insbesondere, dass an der Mikrowelleneinrichtung mindestens ein Einstellparameter auf jeweils einen Wert aus einem Satz von mindestens zwei Werten einstellbar ist. Die Konfiguration umfasst somit in einer Ausgestaltung mindestens einen Einstellparameter mit jeweils mehreren Einstellwerten.

Es ist eine Ausgestaltung, dass der mindestens eine Einstellparameter mindestens einen Einstellparameter aus der Gruppe
- Phase der Mikrowellen,
- Frequenz der Mikrowellen,
- Leistung der Mikrowellen,
- Ausrichtung einer beweglichen Antenne,
- Ausrichtung eines Wobblers,
- Drehgeschwindigkeit einer beweglichen Antenne,
- Drehgeschwindigkeit eines Wobblers
umfasst. Diese Ausgestaltung ermöglicht vorteilhafterweise eine besonders einfache Änderung der Feldverteilung. Beispielsweise kann eine Dreh- oder Winkellage einer Drehantenne und/oder eines Wobblers der Mikrowellen-Einspeisungseinrichtung gezielt eingestellt werden, um eine Feldverteilung der Mikrowellen in dem Garraum zu ändern.

Es ist eine Weiterbildung, dass die Form der Feldverteilungen für mehrere, insbesondere alle, Konfigurationen der Mikrowelleneinrichtung bekannt, insbesondere abgespeichert, sind und nur mindestens eine Konfiguration ausgewählt wird, von der bekannt ist, dass sie in dem erkannten Nicht-Gargut-Bereich keine hohe Leistung, insbesondere keinen Hot Spot, aufweist. Dabei können nacheinander - insbesondere zyklisch wechselnd - auch mehrere Konfigurationen ausgewählt werden, die in dem erkannten Nicht-Gargut-Bereich keine hohe Leistung, insbesondere keinen Hot Spot, aufweisen, aber unterschiedliche Feldverteilungen, insbesondere Hot Spots, im zuvor erkannten Bereich des Garguts aufweisen. Dies ergibt vorteilhafterweise eine besonders gut verteilte Erwärmung durch Mikrowellen in dem Gargut.

Es ist eine Weiterbildung, dass das Mikrowellengerät, insbesondere dessen Steuereinrichtung, dazu eingerichtet ist, die Konfigurationen zufällig auszuwählen. Dies ergibt den Vorteil, dass durch Ausprobieren besonders vorteilhafte Feldverteilungen einstellbar sind, die sich, z.B. aufgrund des Vorhandenseins von Zubehör und/oder Gargut in dem Garraum, nicht oder nicht zuverlässig voreinstellen oder vorhersagen lassen.

Es ist eine Weiterbildung, dass das Mikrowellengerät dazu eingerichtet ist, eine Konfiguration zufällig auszuwählen und folgend mindestens eine Wärmeverteilung aufzunehmen, um den Effekt der mit der Konfiguration zusammenhängenden Feldverteilung der Mikrowellen zu beurteilen. Bewirkt die mit der aktuellen Konfiguration zusammenhängende Feldverteilung eine höhere Leistungseinbringung durch Mikrowellen in den Nicht-Gargut-Bereich als für eine vorherige Konfiguration, kann die vorherige Konfiguration erneut eingestellt werden, oder es kann eine neue Konfiguration eingestellt werden. Eine höhere Energie- oder Leistungseinbringung, insbesondere unter Erzeugung mindestens eines Hotspots, in den Nicht-Gargut-Bereich kann beispielsweise an einer merklichen lokalen Temperaturerhöhung erkannt werden. Allgemein können also Bereiche hoher Feldstärke in dem Nicht-Gargut-Bereich durch Variation der Feldverteilung und folgende Auswahl besonders geeigneter Feldverteilungen, die keine merkliche Erwärmung in dem Nicht-Gargut-Bereich bzw. außerhalb des Garguts erzeugen, vermieden werden. So werden gleichzeitig ein unnötiger Energieeintrag in Komponenten des Nicht-Gargut-Bereichs als auch eine Schädigungen der Komponenten des Garraums vermieden. Ein erwünschter Nebeneffekt dieses Ablaufs ist, dass automatisch der Energieeintrag in das Gargut optimiert wird, da alle Feldverteilungen mit Hot Spots außerhalb des Garguts unterdrückt werden.

In einer möglichen Weiterbildung werden Konfigurationen, die zu einer unerwünschten Erwärmung in dem Nicht-Gargut-Bereich führen, gespeichert und für den weiteren Heizvorgang nicht mehr verwendet. Es entsteht dadurch eine reduzierte Auswahl an möglichen Parametersätzen, die insbesondere für eine gleichmäßige Erwärmung des Garguts abwechselnd verwendet werden können.

Für eine Änderung einer Konfiguration können - falls möglich - ein oder mehrere Einstellparameter geändert werden.

Die Temperaturerfassungseinrichtung (die auch als IR-Detektionseinrichtung bezeichnet werden kann) kann ein oder mehrere Temperatursensoren aufweisen. Der mindestens eine Temperatursensor kann beispielsweise mindestens eine Wärmebildkamera umfassen. Die Temperaturerfassung kann z.B. zweidimensional aus einer festen Betrachtungsposition eines Temperatursensors oder dreidimensional durch eine stereographische Aufnahmetechnik erfolgen. Allgemein kann die Temperaturverteilung als ein-, zwei- oder dreidimensionales Temperaturbild (auch als IR-Bild bezeichenbar) vorliegen.

Auch ist es eine Weiterbildung, dass der Temperatursensor ein Sensor mit geringer Auflösung (z.B. eine IR-Fotodiode oder ein Thermopile) ist, dessen Bild durch Überlagerung mehrerer Aufnahmen aus verschiedenen Positionen des Temperatursensors verbessert wird. Zum Beispiel wird in einer Weiterbildung ein beweglicher Temperatursensor mit genau einer IR-empfindlichen Zelle (z.B. einer IR-Fotodiode) zur Messung verwendet werden, wobei der Temperatursensor den gesamten Garraum durch positionsvariable Aufnahme abtastet und so ein mehrdimensionales Bild erstellt. Die Verwendung mehrerer unterschiedlich positionierter Sensoren und/oder beweglicher Sensoren bietet den Vorteil, dass die Temperaturverteilung des Garraums besonders vollständig erfasst werden kann.

Die Datenverarbeitungseinrichtung ist insbesondere dazu eingerichtet, den Nicht-Gargut-Bereich von dem Raumbereich, in dem sich Gargut befindet, zu unterscheiden.

Die Datenverarbeitungseinrichtung kann eine eigenständige Komponente oder Instanz sein. Sie kann in das Mikrowellengerät integriert sein oder auch eine externe Instanz sein, z.B. ein Netzwerk-Server oder eine cloud-basierte Datenverarbeitungseinrichtung. Die Datenverarbeitungseinrichtung kann alternativ in die Steuereinrichtung integriert sein, welche als dann eine Datenverarbeitungsfunktion zur Durchführung des Verfahrens umfasst.

Die Steuereinrichtung dient zum Betreiben bzw. zur Steuerung des Mikrowellengeräts und damit auch zur Steuerung der Mikrowelleneinrichtung, speziell auch mittels einer Auswahl oder Einstellung der Konfiguration der Mikrowelleneinrichtung.

Es ist eine Ausgestaltung, dass die Datenverarbeitungseinrichtung dazu eingerichtet ist, den Nicht-Gargut-Bereich anhand seines Temperaturniveaus bzw. eines Temperaturniveaus seiner Komponenten zu erkennen. So lässt sich der Nicht-Gargut-Bereich vorteilhafterweise einfach bestimmen. Dabei wird ausgenutzt, dass sich Komponenten des Nicht-Gargut-Bereichs typischerweise schneller aufheizen als Gargut. Dies gilt insbesondere, falls die Komponenten aus Metall bestehen oder Metall aufweisen. Insbesondere wenn der Garraum sein Temperaturgleichgewicht noch nicht erreicht hat (z.B. während des Aufheizens), weisen die Komponenten des Nicht-Gargut-Bereichs typischerweise eine höhere Temperatur auf als Gargut, und der Nicht-Gargut-Bereich kann folglich anhand des Temperaturniveaus der dort enthaltenen Komponenten erkannt oder identifiziert werden. Diese Identifizierung kann z.B. mittels einer Identifizierung von Bereichen (insbesondere Bildbereichen in einem Temperaturbild) durchgeführt werden, die einen vorgegebenen absoluten oder relativen Temperaturschwellwert überschreiten. Das Temperaturniveau kann einem vorgegebenen festen oder variablen (z.B. von einer eingestellten-Soll-Garraumtemperatur und/oder der seit Beginn der Gargutbehandlung vergangenen Zeit) Temperaturschwellwert entsprechen.

Es ist eine alternative oder zusätzliche Ausgestaltung, dass die Datenverarbeitungseinrichtung dazu eingerichtet ist, den Nicht-Gargut-Bereich gegenüber Gargut anhand einer unterschiedlich schnellen Temperaturänderung zu erkennen. Auch hierbei wird ausgenutzt, dass sich Komponenten des Nicht-Gargut-Bereichs typischerweise schneller aufheizen als Gargut, das eine in der Regel höhere Wärmekapazität aufweist. Anstelle einer Auswertung auf ein vorgegebenes Temperaturniveau wird nun aber die Aufheizungsgeschwindigkeit (auch als Erwärmungsrate bezeichnet) als Kriterium zur Zugehörigkeit zu dem Nicht-Gargut-Bereich verwendet: je schneller sich ein Materialvolumen aufheizt, desto höher ist die Wahrscheinlichkeit, dass es sich nicht um Gargut handelt. Flächen mit starkem Temperaturanstieg können daher als Zubehör oder Nicht-Gargut-Bereich des Garraums gewertet werden. Zur Bestimmung der Aufheizungsgeschwindigkeit können die Temperaturverteilungen zweier oder mehr Wärmeverteilungen miteinander verglichen werden.

Es ist eine Weiterbildung, dass die Konfiguration gezielt so eingestellt, dass keine Hot Spots an einem Zubehörteil auftreten. Möglicherweise können Hot Spots weiterhin in einem luftgefüllten Raumbereich des Garraums auftreten, jedoch sind diese in Bezug auf eine Beschädigung (Überhitzung, Funkenbildung usw.) des Mikrowellengeräts weniger kritisch.

Es ist eine Ausgestaltung, dass die Datenverarbeitungseinrichtung dazu eingerichtet ist, mindestens eine Art einer in dem Garraum befindliche Komponente, insbesondere eines Zubehörteils, des Nicht-Gargut-Bereichs anhand ihrer Aufwärmkurve zu identifizieren. Dadurch können Komponenten, insbesondere Zubehörteile, des Nicht-Gargut-Bereichs noch präziser in dem Wärmebild identifiziert werden, wodurch die Konfiguration der Mikrowellenerzeugungseinrichtung noch gezielter auf eine Vermeidung von kritischen Hot Spots hin angepasst werden kann.

Eine solche qualitative Identifizierung von Zubehörteilen des Nicht-Gargut-Bereichs kann durch Abgleich mit charakteristischen Formen in der Temperaturverteilung erreicht werden, was auch als "Objekterkennung im Infrarotbereich" angesehen werden kann. Beispielsweise können in der Temperaturverteilung den Gitterstäben eines Gitterrosts entsprechende Streifen erkannt werden und dadurch auf ein Vorhandensein eines Gitterrosts, auf dessen Einschubhöhe und auf eine Position von darauf abgestelltem Gargut geschlossen werden. Beispielsweise ergeben sich bei einem unterschiedlichen Abstand des Gitterrosts zu der Temperaturerfassungseinrichtung in der Temperaturverteilung andere Abstände der entsprechenden Streifen in der Temperaturverteilung, aus denen wiederum auf eine Einschubhöhe geschlossen werden kann. Anstelle oder zusätzlich zu den durch die Gitterstäbe des Gitterrosts definierten Streifen in der Temperaturverteilung können bei Vorliegen eines Backblechs eine Lage und/oder Länge der Kanten ausgewertet werden, usw. Eine solche Erkennung der verschiedenen Zubehörteile hilft außerdem vorteilhafterweise dabei, Fehlbetriebe wie eine Verwendung eines Backblechs bei einem reinen Mikrowellenbetrieb zu verhindern. Darüber hinaus kann eine Betriebsart an das verwendete Zubehör angepasst werden.

Es ist eine Ausgestaltung, dass die Datenverarbeitungseinrichtung dazu eingerichtet ist, den Nicht-Gargut-Bereich durch ein Vorhandensein von Markern zu erkennen. So lässt sich der Nicht-Gargutbereich besonders präzise bestimmen, und zwar für eine Vielzahl unterschiedlicher Zubehörteile. Die Marker sind spezielle Erkennungszeichen, die als geometrisches Erkennungsmerkmal in der erfassten Wärmeverteilung erkannt werden können. Die Marker sind dazu an entsprechenden Komponenten des Nicht-Gargut-Bereichs (z.B. an einer Garraumwandung, an Zubehörteilen usw.) angeordnet, insbesondere an bekannter Stelle. Es ist eine Weiterbildung, dass die Marker eine Komponente identifizieren, also als Identifikation oder ID für die Komponente, insbesondere ein Zubehör, dienen.

Es ist eine Weiterbildung, dass ein Marker als eine Prägung, Lochung, Textur und/oder Aufrauhung ausgebildet ist. Insbesondere eine Textur oder Aufrauhung mag sich über unterschiedliche Emissionsgrade in der Wärmeverteilung definiert abzeichnen. Ebenfalls kann ein Marker als Bereich mit Materialien mit unterschiedlichen Wärmekapazitäten bzw. Emissionsgraden ausgebildet sein, so dass bei Erwärmung ein definiertes Muster in der Wärmeverteilung erkennbar ist.

Es ist eine Ausgestaltung, dass die Datenverarbeitungseinrichtung dazu eingerichtet ist, den Nicht-Gargut-Bereich während einer Aufheizphase des Garraums zu bestimmen. Dies ist besonders vorteilhaft, da ein Temperaturgleichgewicht in dem Garraum noch nicht erreicht ist und so Temperaturunterschiede zwischen Materialien unterschiedlicher Wärmekapazität (z.B. Gargut und Komponenten des Nicht-Gargut-Bereichs) besonders zuverlässig erkennbar sind.

Es ist eine Weiterbildung, dass die Aufheizphase Teil eines normalen Heizprozesses und also keine gesondert eingestellte Phase ist.

Es ist eine Weiterbildung, dass die Aufheizphase eine gesondert eingestellte Phase ist. So lässt sich der Aufheizvorgang besonders zuverlässig definieren, was eine Erkennung der Komponenten des Nicht-Gargut-Bereichs erleichtert.

Es ist eine Ausgestaltung, dass das Mikrowellengerät zusätzlich mindestens einen Wärmestrahlungsheizkörper aufweist und die Steuereinrichtung dazu eingerichtet ist, während der Aufheizphase (nur) den mindestens einen Wärmestrahlungsheizkörper zu aktivieren. Dadurch wird vorteilhafterweise eine besonders gleichmäßige Aufheizung des Garraums erreicht, was eine besonders zuverlässige Erkennung der Komponenten des Nicht-Gargut-Bereichs ermöglicht.

Es ist eine Weiterbildung, dass die Aufheizphase als eine Vorheizphase vorgesehen ist, während der noch kein Gargut in dem Garraum vorhanden ist. Dies ermöglicht eine besonders zuverlässige und genaue Bestimmung der Komponenten des Garraums. Eine Bestimmung des Nicht-Gargut-Bereichs kann dann z.B. durch Bildvergleich einer Wärmeverteilung während oder mit Beendigung der Vorheizphase und einer Wärmeverteilung nach Einbringung des Garguts (in einer "Garphase") erfolgen. Dies ist besonders vorteilhaft, wenn eine Wärmeverteilung in kurzem zeitlichen Abstand nach Einbringen des Garguts aufgenommen wird, da das Gargut dann noch vergleichsweise kalt ist und sich daher thermisch deutlich gegen den Nicht-Gargut-Bereich absetzt. Die Aufnahme der Wärmeverteilung während der Garphase kann z.B. automatisch nach Erkennen eines Türöffnungs- und folgenden Türschließungsvorgangs während oder nach Beendigung der Vorheizphase durchgeführt werden. Merkliche Abweichungen zwischen den beiden Temperaturverteilungen können als Hinweis auf ein dortiges Vorhandensein von Gargut interpretiert werden.

Es ist eine Weiterbildung, dass zum Erkennen von Komponenten, insbesondere Zubehör, des Nicht-Gargut-Bereichs eine Temperaturentwicklung des unbeladenen Garraums beim Vorheizen mit zuvor aufgezeichneten Vergleichskurven, die mit verschiedenen Zubehörteilen aufgenommen wurden, verglichen werden, um so auf die Art des verwendeten Zubehörteils zu schließen.

Das obige Verfahren kann auch verwendet werden, wenn eine Garraumtür während eines Garablaufs geöffnet und das Gargut bewegt (Umrühren/Wenden) oder kurzzeitig entnommen wird. Dabei kühlt das Zubehör aufgrund der unterschiedlichen Wärmekapazitäten schneller ab als das Gargut. Für die Erkennung des Nicht-Gargut-Bereichs (der sich nach Entnahme und Wiedereinsetzung des Garguts Ändern kann) kann nun der durch Abkühlung entstandene Temperaturunterschied und/oder die unterschiedliche Erwärmungsrate beim Wiederaufheizen genutzt werden.

Die Aufgabe wird auch gelöst durch ein Verfahren zum Betreiben eines Mikrowellengeräts bei dem
- ein Garraum des Mikrowellengeräts aufgeheizt wird,
- eine Wärmeverteilung in dem Garraum kontaktlos erfasst wird,
- aus der Wärmeverteilung ein Nicht-Gargut-Bereich in dem Garraum bestimmt wird und
- eine Feldverteilung von Mikrowellen in dem Garraum so eingestellt wird, dass Bereiche hoher Feldstärke in dem Nicht-Gargut-Bereich vermieden werden.

Das Verfahren kann analog zu dem Mikrowellengerät ausgebildet werden und weist die gleichen Vorteile auf.

Es ist eine Ausgestaltung, dass das Verfahren iterativ durchgeführt wird. Insbesondere kann dazu der Nicht-Gargut-Bereich durch zeitlich aufeinanderfolgende Aufnahmen von Wärmeverteilungen während eines Heizprozesses überwacht werden, und es können bei Bedarf als Ergebnis der Überwachung neue Konfigurationen eingestellt werden, die eine geringere Leistung in den Nicht-Gargut-Bereich einbringen, insbesondere wie oben beschrieben. Es können also iterativ Konfigurationen, die Bereiche hoher Feldstärken in dem Nicht-Gargut-Bereich ergeben, für einen folgenden Betrieb ausgewählt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht ein Haushalts-Gargerät in Form eines Backofens mit einer Mikrowelleneinrichtung und
- Fig.2: zeigt Ablaufschritte eines möglichen Verfahrens zur Einstellung einer Konfiguration der Mikrowelleneinrichtung.

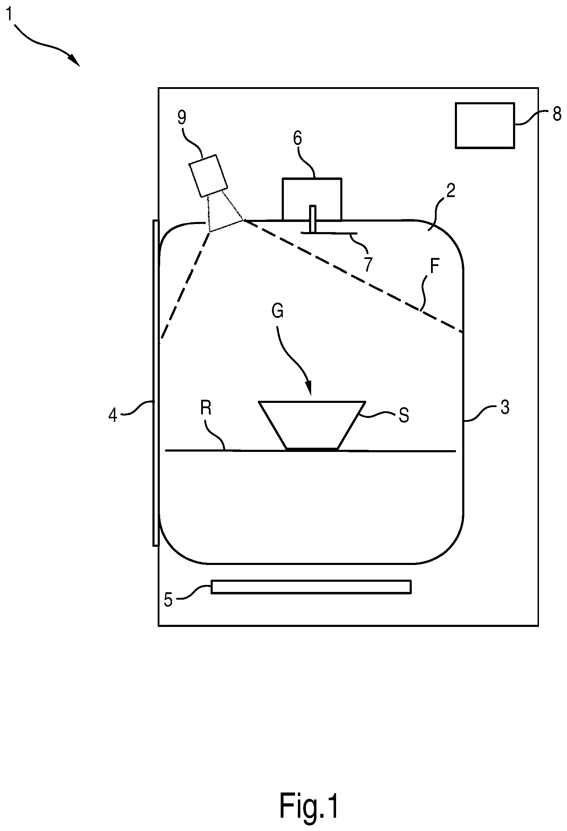

**Fig.1** zeigt ein Haushalts-Gargerät in Form eines Backofens 1 mit integrierter Mikrowellenfunktionalität. Der Backofen 1 weist einen Garraum 2 auf, der von einer Garraumwandung 3 begrenzt wird, deren vorderseitige Beschickungsöffnung mittels einer mikrowellendichten und thermisch isolierenden Garraumtür 4 verschließbar ist.

Zum Heizen von in dem Garraum 2 befindlichem Gargut G ist dieser mittels mindestens eines Wärmestrahlungsheizkörpers (z.B. eines Unterhitze-Heizkörpers, Oberhitze-Heizkörpers, Grillheizkörpers und/oder Heißluft-Heizkörpers, hier angedeutet durch einen Unterhitze-Heizkörper 5) heizbar.

Der Backofen 1 weist ferner eine Mikrowelleneinrichtung 6 mit einer drehbaren Drehantenne 7 auf. Über die Drehantenne 7 können von der Mikrowelleneinrichtung 6 erzeugte Mikrowellen in den Garraum 2 eingebracht werden, worin sie eine bestimmte Mikrowellen-Feldverteilung oder Feldmuster annehmen. Der Betrieb der Wärmestrahlungsheizkörper 5 und der Mikrowelleneinrichtung 6, einschließlich einer Drehlage oder eines Drehwinkels der in einer horizontalen Ebene drehbaren Drehantenne 7, ist gezielt über eine Steuereinrichtung 8 einstellbar. Beispielsweise ist die Drehlage der Drehantenne 7 in Schritten von 1°, 5°, 10° o.ä. einstellbar.

Der Backofen 1 weist außerdem eine Temperaturerfassungseinrichtung zum kontaktlosen Erfassen einer Wärmeverteilung in dem Garraum 2 in Form einer bildpunktweise messenden Wärmebildkamera 9 auf. Das Gargut G, das in einem Gargutbehälter S untergebracht ist, welches wiederum auf einem Zubehör in Form eines Gitterrosts R o.ä. aufliegt, befindet sich wie das Zubehör in einem Sichtfeld F der Wärmebildkamera 9.

Die Steuereinrichtung 8 dient zur Steuerung des Backofens 1 und dient zudem zur Auswertung der von der Wärmebildkamera 9ermittelten Wärmeverteilungen oder Wärmebilder. Die Wärmebilder sind bildpunktartig aufgebaut und weisen eine Auflösung z.B. von 16 x 16, 32 x 24, 64 x 64, 128 x 64, 256 x 256, 512 x 512 oder 2048 x 1024 Bildpunkten auf, sind aber nicht darauf beschränkt. Die Steuereinrichtung 8 dient ferner als eine Datenverarbeitungseinrichtung zum Auswerten der Wärmebilder, insbesondere zum Erkennen eines Nicht-Gargut-Bereichs in dem Garraum 2 in mindestens einem Wärmebild.

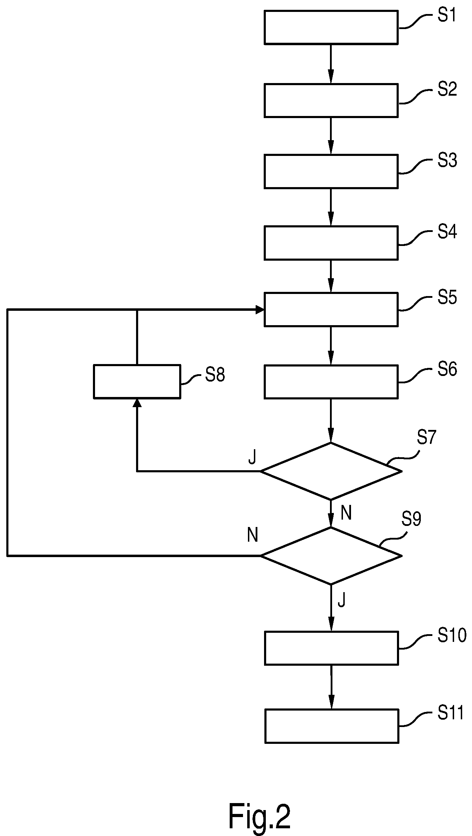

**Fig.2** zeigt Ablaufschritte eines möglichen Verfahrens zum Betreiben des Backofens 1, insbesondere zur Einstellung einer Konfiguration der Mikrowelleneinrichtung 6, 7.

In Schritt S1 wird eine Vorheizphase des Backofens aktiviert, wobei der Garraum 2 nur durch den mindestens einen Wärmestrahlungsheizkörper 5 aufgeheizt wird. Die Mikrowelleneinrichtung 6, 7 bleibt während der Vorheizphase deaktiviert.

In Schritt S2 werden mittels der Wärmebildkamera 9 in ausreichenden zeitlichen Abständen mehrere Wärmebilder aufgenommen.

In Schritt S3 werden die Wärmebilder von der Steuereinrichtung 8 dahingehend ausgewertet, dass unterschiedliche absolute Temperaturen und/oder Heizraten unterschiedlicher Bereiche in den Wärmebildern erkannt werden und Bereiche mit besonders hohen Temperaturen und/oder Heizraten einem Zubehör, z.B. dem Gitterrost R, zugeordnet werden. Der Gitterrost R lässt sich beispielsweise durch ein in den Wärmebildern hell erscheinendes Gittermuster erkennen. Dies kann durch einen für den Gitterrost R typischen Erwärmungsverlauf bestätigt werden.

In Schritt S4 wird mit Beendigung der Vorheizphase - ggf. unter Deaktivierung des mindestens einen Wärmestrahlungsheizkörpers 5 - die Garraumtür 4 geöffnet, das Gargut G in den Garraum 2 eingeführt und die Garraumtür 4 dann wieder geschlossen. Dieses Öffnen und Schließen der Garraumtür 4 wird automatisch erkannt.

Folgend steuert die Steuereinrichtung 8 die Wärmebildkamera 9 dazu an, ein Wärmebild des Garraums 2 aufzunehmen und dieses Wärmebild mit mindestens einem in Schritt S3 aufgenommenen Wärmebild zu vergleichen. Durch Auswertung von Unterschieden in den Wärmebildern werden das Gargut G (als ein kälterer, aus Sicht der Wärmebildkamera 9 aus dem regelmäßigen Gittermuster ausgesparter Bereich) und der Nicht-Gargut-Bereich 3, 4, R erkannt.

Folgend wird in einem Schritt S5 die Mikrowelleneinrichtung 6, 7 in einer bestimmten Konfiguration betrieben. Dabei kann ein Einstellparameter der Konfiguration einer Drehlage der Drehantenne 7 entsprechen.

In einer Variante wird die Mikrowelleneinrichtung 6, 7 nur mit einer Konfiguration aktiviert, von der bekannt ist, dass sie in dem Nicht-Gargut-Bereich keine Hot Spots erzeugt. In einer anderen Variante wird die Mikrowelleneinrichtung 6, 7 nacheinander mit unterschiedlichen Konfigurationen, die z.B. unterschiedlichen Drehstellungen der Drehantenne 7 entsprechen, aktiviert, von denen bekannt ist, dass sie alle in dem Nicht-Gargut-Bereich keine Hot Spots erzeugen. Dies ermöglicht eine besonders gleichmäßige Erwärmung des Garguts G. Dies kann bis zum Ende der Garphase oder des Behandlungsvorgangs weitergeführt werden.

In einer anderen Variante wird in Schritt S5 eine zufällig gewählte Konfiguration der Mikrowelleneinrichtung 6, 7 eingestellt und diese damit betrieben.

Folgend wird in Schritt S6 ein Wärmebild des Garraums 2 aufgenommen und in Schritt S7 überprüft, ob in dem zuvor erkannten oder bestimmten Nicht-Gargut-Bereich eine merkliche lokale Temperaturerhöhung auftritt, die insbesondere auf einen Hot Spot hinweisen kann, z.B. im Bereich des Gitterrosts R und/oder im Bereich einer Garraumwandung 3.

Ist dies der Fall ("J"), wird in Schritt S8 die aktuell eingestellte Konfiguration als "nicht geeignet" gespeichert, zu Schritt S5 zurückverzweigt und dort eine andere Konfiguration für die Mikrowelleneinrichtung 6, 7 zufällig eingestellt.

Ist dies nicht der Fall ("N"), kann die aktuelle Konfiguration in einer Variante für den Rest des Garablaufs oder Behandlungsablaufs beibehalten werden. Alternativ kann die aktuell eingestellte Konfiguration als "geeignet" gespeichert und dann in einem Schritt S9 überprüft werden, ob bereits eine vorgegebene Zahl (z.B. zwei, drei, vier oder mehr) an geeigneten Konfigurationen aufgefunden worden ist.

Ist dies nicht der Fall ("N"), kann zu Schritt S5 zurückverzweigt werden und an der Mikrowelleneinrichtung 6, 7 eine weitere zufällig gewählte Konfiguration eingestellt werden.

Ist dies der Fall ist ("J"), kann die Mikrowelleneinrichtung 6, 7 dann in Schritt S10 abwechselnd nur noch mit den geeigneten Konfigurationen betrieben werden.

Das oben beschriebene Verfahren wird so lange durchgeführt, bis in Schritt S11 ein Abbruchkriterium erreicht worden ist, z.B. eine nutzerseitig oder programmseitig festgelegte Zeitdauer abgelaufen ist.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Backofen
- 2: Garraum
- 3: Garraumwandung
- 4: Garraumtür
- 5: Wärmestrahlungsheizkörper
- 6: Mikrowelleneinrichtung
- 7: Drehantenne
- 8: Steuereinrichtung
- 9: Wärmebildkamera
- F: Sichtfeld
- G: Gargut
- R: Gitterrost
- S: Gargutbehälter
- S1-S11: Verfahrensschritte

## Patentansprüche

1. Mikrowellengerät (1), aufweisend
- eine Mikrowelleneinrichtung (6, 7), die zum Erzeugen von Mikrowellen und zum Einleiten der Mikrowellen in einen Garraum (2) eingerichtet ist und die mit mindestens zwei Konfigurationen betreibbar ist, welche unterschiedliche Feldverteilungen der Mikrowellen in dem Garraum (2) erzeugen,
- mindestens einen Wärmestrahlungsheizkörper (5),
- eine Temperaturerfassungseinrichtung (9), die zum kontaktlosen Erfassen einer Wärmeverteilung in dem Garraum (2) eingerichtet ist,
- eine Datenverarbeitungseinrichtung (8), die zum Erkennen eines Nicht-Gargut-Bereichs (3, 4, R, S) in dem Garraum (2) aus der erfassten Wärmeverteilung eingerichtet ist und
- eine Steuereinrichtung (8), die zum Einstellen einer aktuellen Konfiguration der Mikrowelleneinrichtung (6, 7) und zum Betreiben der Mikrowelleneinrichtung (6, 7) eingerichtet ist,
wobei
- die Steuereinrichtung (8) dazu eingerichtet ist, mindestens eine Konfiguration der Mikrowelleneinrichtung (6, 7) im Hinblick auf Verringerung einer Leistung der Mikrowellen in dem erkannten Nicht-Gargut-Bereich (3, 4, R, S) auszuwählen oder einzustellen und
- die Datenverarbeitungseinrichtung (8) dazu eingerichtet ist, den Nicht-Gargut-Bereich (3, 4, R, S) während einer Vorheizphase zu bestimmen, bei der noch kein Gargut in dem Garraum (2) vorhanden ist, wobei die Steuereinrichtung (8) während der Vorheizphase dazu eingerichtet ist, nur den mindestens einen Wärmestrahlungsheizkörper (5) zu aktivieren und die Mikrowelleneinrichtung (6, 7) deaktiviert bleibt.

2. Mikrowellengerät (1) nach Anspruch 1, wobei die Datenverarbeitungseinrichtung (8) dazu eingerichtet ist, den Nicht-Gargut-Bereich (3, 4, R, S) anhand seines Temperaturniveaus zu erkennen.

3. Mikrowellengerät (1) nach einem der vorhergehenden Ansprüche, wobei die Datenverarbeitungseinrichtung (8) dazu eingerichtet ist, den Nicht-Gargut-Bereich (3, 4, R, S) anhand eines Temperaturunterschieds zwischen Komponenten des Nicht-Gargut-Bereichs (3, 4, R, S) und dem Gargut (G) zu erkennen.

4. Mikrowellengerät (1) nach einem der vorhergehenden Ansprüche, wobei die Datenverarbeitungseinrichtung (8) dazu eingerichtet ist, den Nicht-Gargut-Bereich (3, 4, R, S) anhand einer unterschiedlichen Geschwindigkeit einer Temperaturänderung zwischen Komponenten des Nicht-Gargut-Bereichs (3, 4, R, S) und dem Gargut (G) zu erkennen.

5. Mikrowellengerät (1) nach einem der vorhergehenden Ansprüche, wobei die Datenverarbeitungseinrichtung (8) dazu eingerichtet ist, mindestens eine Art einer in dem Garraum (2) befindliche Komponente des Nicht-Gargut-Bereichs (3, 4, R, S) anhand ihrer Aufwärmkurve zu identifizieren.

6. Mikrowellengerät (1) nach einem der vorhergehenden Ansprüche, wobei die Datenverarbeitungseinrichtung (8) dazu eingerichtet ist, mindestens eine Komponente des Nicht-Gargut-Bereichs (3, 4, R, S) durch ein Vorhandensein von an der Komponente angeordneten Markern zu erkennen.

7. Mikrowellengerät (1) nach einem der vorhergehenden Ansprüche, wobei die Konfiguration mindestens einen Einstellparameter mit jeweils mehreren Einstellwerten umfasst.

8. Mikrowellengerät (1) nach Anspruch 7, wobei der mindestens eine Einstellparameter mindestens einen Einstellparameter aus der Gruppe
- Phase der Mikrowellen,
- Frequenz der Mikrowellen,
- Leistung der Mikrowellen,
- Ausrichtung einer beweglichen Antenne (7) und/oder eines Wobblers,
- Drehgeschwindigkeit einer beweglichen Antenne (7) und/oder eines Wobblers umfasst.

9. Verfahren (S1-S11) zum Betreiben eines Mikrowellengeräts (1), bei dem
- ein Garraum (2) des Mikrowellengeräts (1) während einer Vorheizphase, bei der noch kein Gargut in dem Garraum (2) vorhanden ist, nur mittels mindestens eines Wärmestrahlungsheizkörpers (5) aufgeheizt wird (S1),
- eine Wärmeverteilung in dem Garraum (2) kontaktlos erfasst wird (S2),
- aus der Wärmeverteilung ein Nicht-Gargut-Bereich (3, 4, R, S) in dem Garraum (2) bestimmt wird (S3) und
- im Anschluss an die Vorheizphase eine Feldverteilung von Mikrowellen in dem Garraum (2) so eingestellt wird, dass Bereiche hoher Feldstärke in dem Nicht-Gargut-Bereich (3, 4, R, S) vermieden werden (S5-S10).

10. Verfahren (S1-S11) nach Anspruch 9, bei dem das Verfahren iterativ durchgeführt wird und Bereiche hoher Feldstärke in dem Nicht-Gargut-Bereich (3, 4, R, S) durch Variation der Feldverteilung und folgende Auswahl mindestens einer besonders geeigneten Feldverteilung vermieden werden.

## Claims

1. Microwave appliance (1), having
- a microwave facility (6, 7), which is configured for generating microwaves and for introducing the microwaves into a cooking compartment (2) and which can be operated with at least two configurations which generate different field distributions of the microwaves in the cooking compartment (2),
- a temperature acquisition facility (9), which is configured for contactlessly acquiring a heat distribution in the cooking compartment (2),
- a data processing facility (8), which is configured for identifying a non-food to be cooked region (3, 4, R, S) in the cooking compartment (2) from the acquired heat distribution and
- a control facility (8), which is configured for setting a current configuration of the microwave facility (6, 7) and for operating the microwave facility (6, 7),
wherein
- the control facility (8) is configured to select or set at least one configuration of the microwave facility (6, 7) with regard to reducing a power of the microwaves in the identified non-food to be cooked region (3, 4, R, S) and
- wherein the data processing facility (8) is configured to determine the non-food to be cooked region (3, 4, R, S) during a preheating phase, in which there is not yet any food to be cooked present in the cooking compartment (2), wherein the control facility (8) is configured, during the preheating phase, to activate only the at least one thermal radiation heating element (5) and the microwave facility (6, 7) remains deactivated.

2. Microwave appliance (1) according to claim 1, wherein the data processing facility (8) is configured to identify the non-food to be cooked region (3, 4, R, S) on the basis of its temperature level.

3. Microwave appliance (1) according to one of the preceding claims, wherein the data processing facility (8) is configured to identify the non-food to be cooked region (3, 4, R, S) on the basis of a temperature difference between components of the non-food to be cooked region (3, 4, R, S) and the food to be cooked (G).

4. Microwave appliance (1) according to one of the preceding claims, wherein the data processing facility (8) is configured to identify the non-food to be cooked region (3, 4, R, S) on the basis of a different speed of a temperature change between components of the non-food to be cooked region (3, 4, R, S) and the food to be cooked (G).

5. Microwave appliance (1) according to one of the preceding claims, wherein the data processing facility (8) is configured to identify at least one type of a component of the non-food to be cooked region (3, 4, R, S) situated in the cooking compartment (2) on the basis of its heating curve.

6. Microwave appliance (1) according to one of the preceding claims, wherein the data processing facility (8) is configured to identify at least one component of the non-food to be cooked region (3, 4, R, S) by a presence of markers arranged on the component.

7. Microwave appliance (1) according to one of the preceding claims, wherein the configuration comprises at least one setting parameter with a plurality of setting values in each case.

8. Microwave appliance (1) according to claim 7, wherein the at least one setting parameter comprises at least one setting parameter from the group consisting of
- phase of the microwaves,
- frequency of the microwaves,
- power of the microwaves,
- orientation of a movable antenna (7) and/or a wobbler,
- rotational speed of a movable antenna (7) and/or a wobbler.

9. Method (S1-S11) for operating a microwave appliance (1), in which
- a cooking compartment (2) of the microwave appliance (1) is heated up (S1) during a preheating phase, in which there is not yet any food to be cooked present in the cooking compartment (2), only by means of at least one thermal radiation heating element (5),
- a heat distribution in the cooking compartment (2) is acquired (S2) in a contactless manner,
- a non-food to be cooked region (3, 4, R, S) in the cooking compartment (2) is determined (S3) from the heat distribution and,
- following the preheating phase, a field distribution of microwaves in the cooking compartment (2) is set such that regions with high field strength in the non-food to be cooked region (3, 4, R, S) are avoided (S5, S10).

10. Method (S1-S11) according to claim 9, in which the method is performed in an iterative manner and regions with high field strength in the non-food to be cooked region (3, 4, R, S) can be avoided by varying the field distribution and subsequently selecting at least one particularly suitable field distribution.

## Revendications

1. Appareil à micro-ondes (1), présentant :
- un dispositif à micro-ondes (6, 7) qui est conçu afin de générer des micro-ondes et afin d'introduire les micro-ondes dans une chambre de cuisson (2) et qui peut fonctionner avec au moins deux configurations qui génèrent des répartitions de champ différentes des micro-ondes dans la chambre de cuisson (2),
- au moins un radiateur à rayonnement thermique (5),
- un dispositif de détection de température (9), qui est conçu afin de détecter sans contact une répartition de chaleur dans la chambre de cuisson (2),
- un dispositif de traitement de données (8) qui est conçu afin d'identifier une région sans aliment à cuire (3, 4, R, S) dans la chambre de cuisson (2) à partir de la répartition de la chaleur détectée, et
- un dispositif de commande (8) qui est conçu afin d'ajuster une configuration actuelle du dispositif à micro-ondes (6, 7) et afin de faire fonctionner le dispositif à micro-ondes (6, 7),
dans lequel :
- le dispositif de commande (8) est conçu afin de sélectionner ou d'ajuster au moins une configuration du dispositif à micro-ondes (6, 7) en vue de réduire une puissance des micro-ondes dans la région sans aliment à cuire (3, 4, R, S) identifiée, et
- le dispositif de traitement de données (8) est conçu afin de déterminer la région sans aliment à cuire (3, 4, R, S) pendant une phase de préchauffage pendant laquelle il n'y a pas encore d'aliment à cuire dans la chambre de cuisson (2), dans lequel le dispositif de commande (8) est conçu afin de, pendant la phase de préchauffage, activer uniquement le au moins un radiateur à rayonnement thermique (5) et dans lequel le dispositif à micro-ondes (6, 7) reste désactivé.

2. Appareil à micro-ondes (1) selon la revendication 1, dans lequel le dispositif de traitement de données (8) est conçu afin d'identifier la région sans aliment à cuire (3, 4, R, S) à l'aide de son niveau de température.

3. Appareil à micro-ondes (1) selon l'une quelconque des revendications précédentes, dans lequel le dispositif de traitement de données (8) est conçu afin d'identifier la région sans aliment à cuire (3, 4, R, S) à l'aide d'une différence de température entre des composants de la région sans aliment à cuire (3, 4, R, S) et l'aliment à cuire (G).

4. Appareil à micro-ondes (1) selon l'une quelconque des revendications précédentes, dans lequel le dispositif de traitement de données (8) est conçu afin d'identifier la région sans aliment à cuire (3, 4, R, S) à l'aide d'une vitesse différente de modification de température entre des composants de la région sans aliment à cuire (3, 4, R, S) et l'aliment à cuire (G).

5. Appareil à micro-ondes (1) selon l'une quelconque des revendications précédentes, dans lequel le dispositif de traitement de données (8) est conçu afin d'identifier au moins un type d'un composant de la région sans aliment à cuire (3, 4, R, S) situé dans la chambre de cuisson (2) à l'aide de sa courbe de chauffage.

6. Appareil à micro-ondes (1) selon l'une quelconque des revendications précédentes, dans lequel le dispositif de traitement de données (8) est conçu afin d'identifier au moins un composant de la région sans aliment à cuire (3, 4, R, S) grâce à la présence de marqueurs agencés au niveau du composant.

7. Appareil à micro-ondes (1) selon l'une quelconque des revendications précédentes, dans lequel la configuration comprend au moins un paramètre d'ajustement comprenant respectivement plusieurs valeurs d'ajustement.

8. Appareil à micro-ondes (1) selon la revendication 7, dans lequel le au moins un paramètre d'ajustement comprend au moins un paramètre d'ajustement issu du groupe ci-dessous :
- phase des micro-ondes,
- fréquence des micro-ondes,
- puissance des micro-ondes,
- orientation d'une antenne mobile (7) et/ou d'un wobbler,
- vitesse de rotation d'une antenne mobile (7) et/ou d'un wobbler.

9. Procédé (S1 à S11) de fonctionnement d'un appareil à micro-ondes (1), dans lequel :
- une chambre de cuisson (2) du four à micro-ondes (1) n'est chauffée (S1) qu'au moyen d'au moins un radiateur à rayonnement thermique (5) pendant une phase de préchauffage au cours de laquelle il n'y a pas encore d'aliment à cuire dans la chambre de cuisson (2),
- une répartition de chaleur dans la chambre de cuisson (2) est détectée (S2) sans contact,
- une région sans aliment à cuire (3, 4, R, S) au sein de l'espace de cuisson (2) est déterminée (S3) à partir de la répartition de chaleur, et
- après la phase de préchauffage, une répartition de champ des micro-ondes dans la chambre de cuisson (2) est ajustée de manière à éviter des régions à forte intensité de champ dans la région sans aliment à cuire (3, 4, R, S) (S5 à S10).

10. Procédé (S1 à S11) selon la revendication 9, dans lequel le procédé est mis en œuvre de manière itérative et des régions à forte intensité de champ sont évitées dans la région sans aliment à cuire (3, 4, R, S) grâce à une variation de la répartition de champ et à une sélection ultérieure d'au moins une répartition de champ particulièrement appropriée.
